# EUROPÄISCHE PATENTSCHRIFT

(11) **EP 4 178 758 B1**
(45) Veröffentlichungstag und Bekanntmachung des Hinweises auf die Patenterteilung: **19.06.2024**
(21) Anmeldenummer: 21740020.9
(22) Anmeldetag: 02.07.2021
(51) Int. Cl.: B23Q 7/04, B25J 15/02

(54) **UMRÜSTBARE GREIFVORRICHTUNG**
CONVERTIBLE GRIPPING DEVICE
DISPOSITIF DE PREHENSION CONVERTIBLE

(30) Priorität: 08.07.2020 CH 8442020
(43) Veröffentlichungstag der Anmeldung: 17.05.2023
(73) Patentinhaber: Reishauer AG, 8304 Wallisellen (CH)
(72) Erfinder: CASAULTA, Patrick, 8700 Küsnacht (CH)
(74) Vertreter: Detken, Andreas
(86) Internationale Anmeldenummer: PCT/EP2021/068422
(87) Internationale Veröffentlichungsnummer: WO 2022/008391

(56) Entgegenhaltungen:
- CN-A- 103 921 162
- DE-C1- 10 213 127
- FR-A1- 2 510 928

## Beschreibung

### TECHNISCHES GEBIET

Die vorliegende Erfindung betrifft eine Greifvorrichtung, eine damit ausgestattete Werkzeugmaschine, eine Verwendung einer solchen Greifvorrichtung sowie ein Verfahren zu ihrem Betrieb.

### STAND DER TECHNIK

Aus dem Stand der Technik sind sogenannte Zweibacken-Parallelgreifer bekannt. Ein Zweibacken-Parallelgreifer weist einen Grundkörper und zwei Greiferbacken auf. Die Greiferbacken sind am Grundkörper synchron aufeinander zu und voneinander weg linear verschiebbar. Der Antrieb für diese Hubbewegung kann z.B. pneumatisch oder elektrisch erfolgen. Zweibacken-Parallelgreifer sind beispielsweise von der Zimmer Group GmbH, DE-77866 Rheinau, als "Serie GPP5000" (pneumatisch) und "Serie GEP5000" (elektrisch) in unterschiedlichen Baugrössen, mit unterschiedlichen Hubbereichen und unterschiedlichen Bereichen für die Greifkraft erhältlich. Die Backen können durch eine Rückstellfeder in Richtung der offenen oder geschlossenen Stellung vorbelastet sein. Ein pneumatisch angetriebener Zweibacken-Parallelgreifer ist auch aus der Produktinformation "Universalgreifer PGN-Plus-P 380" der Schunk GmbH & Co. KG, DE-74348 Lauffen bekannt.

Ebenfalls sind aus dem Stand der Technik sogenannte Zweibacken-Winkelgreifer bekannt. Bei diesen werden die Greiferbacken um zwei parallele Schwenkachsen synchron aufeinander zu und voneinander weg verschwenkt. Als Beispiel sei die "Serie GPW5000" der Zimmer Group GmbH genannt. Im Folgenden werden Zweibacken-Parallelgreifer und Zweibacken-Winkelgreifer allgemein als Zweibackengreifer bezeichnet.

Im Stand der Technik wurde vorgeschlagen, zwei einzelne Zweibackengreifer auf einem gemeinsamen Halter anzuordnen, um einen Doppelgreifer zu bilden. So wird in DE29500340U1 vorgeschlagen, zwei Zweibacken-Winkelgreifer entweder winklig zueinander oder parallel nebeneinander an einem gemeinsamen Halter anzuordnen. CN103921162A offenbart eine Greifvorrichtung mit den Merkmalen des Oberbegriffs des Anspruchs 1.

Ein wichtiges Anwendungsgebiet von Greifern sind Handhabungsvorrichtungen zum Werkstückwechsel an einer Werkzeugmaschine, insbesondere zum Wechseln von Zahnrädern an einer Verzahnmaschine. Die Handhabungsvorrichtung dient dazu, Werkstücke zwischen einer Werkstückspindel und einer Werkstückablage zu bewegen. Die Werkstücke werden dazu mit einem Greifer der Handhabungsvorrichtung ergriffen.

Zur Minimierung der Taktzeiten einer Werkzeugmaschine kommen gelegentlich Handhabungsvorrichtungen mit Doppelgreifern zum Einsatz. Mit dem einen Zweibackengreifer wird ein fertig bearbeitetes Werkstück (Fertigteil) von der Werkstückspindel entnommen, während der andere Zweibackengreifer das nächste Rohteil bereithält. Die Handhabungsvorrichtung bewegt den Doppelgreifer dann in eine Position, in der er das Rohteil an die Werkstückspindel übergibt Anschliessend bringt die Handhabungsvorrichtung den Doppelgreifer in eine Position, in der der Doppelgreifer das Fertigteil in einer Werkstückablage ablegt und das nächste Rohteil aufnimmt. Dadurch kann gegenüber einem Einfachgreifer eine erhebliche Zeitersparnis erzielt werden.

Während Handhabungsvorrichtungen mit Doppelgreifern vor allem bei Werkstücken mit kleinen Durchmessern Einsatz finden, können sie aus Platzgründen häufig nicht für grössere Werkstücke eingesetzt werden. Wenn auf derselben Maschine sowohl kleine als auch grosse Werkstücke bearbeitet werden sollen, muss daher entweder auf die Vorteile eines Doppelgreifers verzichtet werden, oder es muss jedes Mal ein aufwändiger Austausch oder Umbau der gesamten Handhabungsvorrichtung erfolgen.

### DARSTELLUNG DER ERFINDUNG

Es ist eine Aufgabe der vorliegenden Erfindung, eine Greifvorrichtung anzugeben, die für Werkstücke verschiedener Grösse verwendbar ist, wobei die Greifvorrichtung für kleinere Werkstücke so modifiziert werden kann, dass sie einen besonders schnellen Werkstückwechsel erlaubt.

Diese Aufgabe wird durch die Merkmale des Anspruchs 1 gelöst. Vorteilhafte Weiterbildungen sind in den abhängigen Ansprüchen angegeben.

Es wird eine Greifvorrichtung vorgeschlagen, die einen Halter und zwei Greifereinheiten umfasst. Jede der Greifereinheiten weist einen Grundkörper mit einem eigenen Antrieb und zwei Basisbacken auf. Die Basisbacken sind durch den Antrieb gegenüber dem Grundkörper synchron gegenläufig bewegbar. Die beiden Greifereinheiten sind derart nebeneinander am Halter angeordnet, dass die Basisbacken beider Greifereinheiten parallel zu einer gemeinsamen Greiferebene bewegbar sind. Eine der Basisbacken jeder Greifereinheit bildet eine innere Basisbacke, und die andere Basisbacke jeder Greifereinheit bildet eine äussere Basisbacke. Die inneren Basisbacken der beiden Greifereinheiten sind zwischen den äusseren Basisbacken angeordnet. Die Greifvorrichtung ist als Einfachgreifer ausgebildet, indem an jeder der äusseren Basisbacken jeweils ein erster Greiferfinger angebracht ist, so dass mit den ersten Greiferfingern ein erster Gegenstand aufnehmbar ist, während die inneren Basisbacken keine Greiferfinger zum Aufnehmen von Gegenständen tragen.

Es werden also an einem gemeinsamen Halter, der z.B. als Schwenkarm ausgebildet sein kann, nebeneinander zwei Greifereinheiten vorgesehen. Ein solcher Aufbau ist an sich für einen Doppelgreifer charakteristisch. Die Greifvorrichtung wird aber nicht als Doppelgreifer betrieben, sondern sie wird als Einfachgreifer betrieben. Dabei wird nur jeweils die aussen angeordnete Basisbacke jeder Greifereinheit eingesetzt, während die innen angeordneten Basisbacken am Greifvorgang nicht teilnehmen. Die äusseren Basisbacken der beiden Greifereinheiten haben einen grösseren Abstand voneinander als die beiden Basisbacken jeder einzelnen Greifereinheit voneinander. Dadurch können von der Greifvorrichtung grössere Gegenstände (insbesondere Werkstücke) aufgenommen werden als von einer einzelnen Greifereinheit. Da jede der beiden Greifereinheiten einen eigenen Antrieb und gegebenenfalls eine eigene Rückstellfeder aufweist, kann eine doppelt so grosse Greifkraft wie bei einer einzelnen Greifereinheit erzeugt werden. Das ist gerade bei grossen Gegenständen sehr vorteilhaft.

Vorzugsweise weist die Greifvorrichtung eine Steuerung auf, die dazu ausgebildet ist, in einem ersten Betriebsmodus die Antriebe der beiden Greifereinheiten derart gekoppelt anzusteuern, dass die äusseren Basisbacken der beiden Greifereinheiten synchron gegenläufig bewegt werden, um einen Gegenstand aufzunehmen oder abzulegen.

Die Greifvorrichtung lässt sich einfach zu einem Doppelgreifer umrüsten, indem zwei weitere erste Greiferfinger an den inneren Basisbacken angebracht werden, oder indem die beiden ersten Greiferfinger von den äusseren Basisbacken entfernt werden und an jeder der äusseren und inneren Basisbacken jeweils ein zweiter Greiferfinger angebracht wird, wobei die zweiten Greiferfinger zum Aufnehmen von anderen, meist kleineren, Gegenständen ausgebildet sind. Auf diese Weise kann mit jeder der beiden Greifereinheiten jeweils unabhängig von der anderen Greifereinheit ein zweiter Gegenstand aufgenommen werden.

Die Greifvorrichtung kann entsprechend im Sinne eines Kits die weiteren Greiferfinger umfassen, die zur Umrüstung auf den Doppelgreiferbetrieb benötigt werden. Insbesondere kann die Greifvorrichtung die erwähnten beiden weiteren ersten Greiferfinger oder die erwähnten vier zweiten Greiferfinger umfassen. Diese sind für den Doppelgreiferbetrieb an den entsprechenden Basisbacken anbringbar, während sie im Einfachgreiferbetrieb von den Basisbacken entfernt sind.

Entsprechend ist vorteilhaft die Steuerung für den Doppelgreiferbetrieb in einen zweiten Betriebsmodus umschaltbar, in dem sie die beiden Greifereinheiten unabhängig voneinander ansteuert.

Um zuverlässig den Betriebszustand der Greifvorrichtung feststellen zu können, kann jede der Greifereinheiten eine Positionserfassungseinrichtung aufweisen, die dazu ausgebildet ist, eine Position eines Targets an einem der Greiferfinger zu ermitteln. Vorzugsweise handelt es sich dabei um den jeweils äusseren Greiferfinger, d.h. um denjenigen Greiferfinger, der an der jeweiligen äusseren Basisbacke angebracht ist. Dadurch kann sowohl im Einfachgreiferbetrieb als auch im Doppelgreiferbetrieb zuverlässig festgestellt werden, in welcher Stellung sich die beiden äusseren Basisbacken befinden.

Die Positionserfassungseinrichtung kann insbesondere einen induktiven Positionssensor umfassen. In diesem Fall handelt es sich beim Target vorzugsweise um ein Target aus einem weichmagnetischen Material. Es sind aber auch andere Messprinzipien denkbar, z.B. ein optischer Abstandssensor oder ein Wirbelstromsensor.

Die Basisbacken sind vorzugsweise gegenüber dem Grundkörper der jeweiligen Greifereinheit linear verschiebbar, d.h., die jeweilige Greifereinheit bildet einen Zweibacken-Parallelgreifer. Alternativ können die Basisbacken gegenüber dem Grundkörper aber auch verschwenkbar sein, d.h., die jeweilige Greifereinheit bildet einen Zweibacken-Winkelgreifer.

Der Antrieb für die Basisbacken jeder Greifereinheit kann insbesondere pneumatisch oder elektrisch betätigbar sein. Die Basisbacken können derart mechanisch mit dem Antrieb gekoppelt sein, dass sie die synchrone gegenläufige Bewegung bei der Betätigung des Antriebs zwangsläufig ausführen. Jede Greifereinheit kann eine Rückstellfeder aufweisen, um die Greiferbacken im antriebslosen Zustand in Richtung der geschlossenen oder offenen Stellung der Basisbacken vorzubelasten.

Die ersten und zweiten Greiferfinger können zum Aufnehmen von verschiedenartigen Gegenständen ausgebildet sein. Eine wichtige Klasse von Gegenständen sind Werkstücke für Werkzeugmaschinen. In bevorzugten Ausführungsformen sind die Greiferfinger zum Aufnehmen von verzahnten Werkstücken ausgebildet, insbesondere von aussenverzahnten Zahnrädern (Stirnrädern). Die Werkstücke werden in diesem Fall zwischen den Greiferfingern aufgenommen, indem zwei Greiferfinger synchron aufeinander zu bewegt werden. Jeder Greiferfinger weist eine nach innen zum Werkstück hin ausgerichtete Greiferbacke auf, die so ausgebildet ist, dass die Greiferbacken als Folge dieser Bewegung das Werkstück an seinem Aussenumfang kraftschlüssig durch eine nach innen gerichtete Greifkraft halten. Es ist aber auch denkbar, die Greifvorrichtung dazu einzusetzen, ringförmige, insbesondere innenverzahnte, Werkstücke am Innenumfang aufzunehmen. Dazu können die Greiferfinger entsprechend nach aussen ausgerichtete Greiferbacken oder Greiferbolzen aufweisen, die so ausgebildet sind, dass sie als Folge einer gegenläufigen Bewegung der Greiferfinger nach aussen das Werkstück an seinem Innenumfang kraftschlüssig durch eine nach aussen gerichtete Greifkraft halten.

Vorzugsweise sind die Greiferfinger modular aufgebaut, um eine besonders schnelle und flexible Anpassung an verschiedenartige Werkstücke zu ermöglichen. Dazu weist jeder der ersten und/oder zweiten Greiferfinger einen Grundfinger und eine davon separat ausgebildete Greiferbacke auf. Der Grundfinger ist mit einer der Basisbacken lösbar verbindbar, insbesondere an seinem proximalen Ende. Die Greiferbacke ist lösbar mit dem Grundfinger verbunden, insbesondere in einem Bereich zwischen dem proximalen und dem distalen Ende des Grundfingers. Auf diese Weise können die Greiferbacken sehr einfach und schnell ausgewechselt werden, um die Vorrichtung an ein anderes Werkstück anzupassen.

Ein besonders schneller Wechsel der Greiferbacken wird möglich, wenn die jeweilige Greiferbacke mit dem zugeordneten Grundfinger durch eine lösbare Rastverbindung verbindbar ist.

In einer vorteilhaften Ausgestaltung weist dazu die Greiferbacke mindestens einen Befestigungsnocken auf. Der Grundfinger definiert eine Fingerlängsrichtung. Er weist eine sich quer zur Fingerlängsrichtung erstreckende laterale Einführöffnung auf, in die der mindestens eine Befestigungsnocken der Greiferbacke quer zur Fingerlängsrichtung einschiebbar ist. Am Grundfinger ist ein federbelasteter Fixierstift mit einem Rastvorsprung angebracht. Der Rastvorsprung kann z.B. durch einen quer durch den Fixierstift verlaufenden Querstift gebildet sein. Mindestens der Rastvorsprung erstreckt sich in die Einführöffnung hinein. Er rastet in eine Ausnehmung des Befestigungsnockens ein, wenn der Befestigungsnocken in die Einführöffnung eingeschoben ist, um die lösbare Rastverbindung herzustellen. Der Fixierstift definiert eine Stiftlängsachse. Der Fixierstift ist entlang der Stiftlängsachse gegenüber dem Grundfinger verschiebbar. Er erstreckt sich in einen ausserhalb des Grundfingers gelegenen Bereich. In diesem Bereich ist am Fixierstift ein Betätigungselement ausgebildet oder mit dem Fixierstift verbunden. Das Betätigungselement kann insbesondere als Scheibe oder Kappe ausgebildet sein, die eine Auflagefläche für einen Finger des Benutzers bildet. Durch axialen Druck auf das Betätigungselement und die dadurch verursachte Verschiebung des Fixierstifts entlang seiner Stiftlängsachse ist die lösbare Rastverbindung wieder lösbar. Der Fixierstift kann in dem ausserhalb des Grundfingers gelegenen Bereich von einer Schraubenfeder umgeben sein. Diese kann zwischen einer Aussenfläche des Grundfingers und einem am Fixierstift angebrachten Gegenanschlag, der z.B. am Betätigungselement ausgebildet sein kann, komprimierbar sein, um den Fixierstift in Richtung der Stellung, in der er den mindestens einen Befestigungsnocken fixiert, mit einer Federkraft zu belasten. Bevorzugt weist die Greiferbacke zwei parallele Befestigungsnocken auf, und der Fixierstift erstreckt sich im eingeschobenen Zustand durch einen zwischen den Befestigungsnocken gelegenen Bereich der Einführöffnung. Der Fixierstift weist entsprechend zwei Rastvorsprünge auf, die sich symmetrisch zur Längsachse des Fixierstifts quer zur Stiftlängsachse erstrecken. Insbesondere in diesem Fall ist es von Vorteil, wenn die Rastvorsprünge beidseitig vom Fixierstift durch einen Querstift gebildet werden, der sich quer durch den Fixierstift hindurch erstreckt.

Die Greifvorrichtung kann besonders vorteilhaft in einer Verzahnmaschine verwendet werden, um verzahnte Werkstücke zu handhaben, insbesondere für den Werkstückwechsel, d.h., um Rohteile der Verzahnmaschine zuzuführen und Fertigteile aus der Verzahnmaschine zu entnehmen. Die vorliegende Erfindung bezieht sich dementsprechend auch auf eine Verzahnmaschine mit einer Greifvorrichtung der vorstehend genannten Art.

Die vorliegende Erfindung stellt ausserdem ein Verfahren zum Betrieb einer Greifvorrichtung der vorstehend genannten Art zur Verfügung. In diesem Verfahren wird im Einfachgreiferbetrieb ein Gegenstand mit den ersten Greiferfingern aufgenommen, indem die Antriebe der beiden Greifereinheiten derart gekoppelt angesteuert werden, dass die äusseren Basisbacken der beiden Greifereinheiten synchron gegenläufig bewegt werden.

Das Verfahren kann des Weiteren das Umrüsten der Greifvorrichtung vom Einfachgreifer zum Doppelgreifer umfassen, indem entweder zwei weitere erste Greiferfinger an den inneren Basisbacken angebracht werden, oder indem die beiden ersten Greiferfinger von den äusseren Basisbacken entfernt werden und an jeder der äusseren und inneren Basisbacken jeweils ein zweiter Greiferfinger angebracht wird.

Nach dem Umrüsten zum Doppelgreifer kann das Verfahren umfassen, dass mit den beiden Greifereinheiten unabhängig voneinander Gegenstände aufgenommen werden. Dazu werden die Antriebe der beiden Greifereinheiten derart angesteuert, dass die Basisbacken jeder der beiden Greifereinheiten unabhängig von den Basisbacken der jeweils anderen Greifereinheit synchron gegenläufig bewegt werden.

Das Verfahren kann sowohl im Einfachgreiferbetrieb als auch im Doppelgreiferbetrieb umfassen, dass eine Position jeweils eines Targets auf denjenigen Greiferfingern bestimmt wird, die auf den äusseren Basisbacken der beiden Greifereinheiten angebracht sind.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine vergrösserte Ansicht einer an sich bekannten einzelnen Greifereinheit;
- Fig. 2: eine Greifvorrichtung mit zwei Greifereinheiten in einer perspektivischen Ansicht;
- Fig. 3: die Greifvorrichtung der Fig. 1 in einer Explosionsdarstellung;
- Fig. 4: die Greifvorrichtung der Fig. 1 nach der Umrüstung für den Einfachgreiferbetrieb in einer Explosionsdarstellung;
- Fig. 5: ein Grundfingerpaar in einer perspektivischen Ansicht;
- Fig. 6: eine Draufsicht auf einen der Grundfinger;
- Fig. 7: eine vergrösserte Schnittansicht in der Ebene A-A der Fig. 6;
- Fig. 8: einen vergrösserten Ausschnitt der Fig. 7 im Bereich Z;

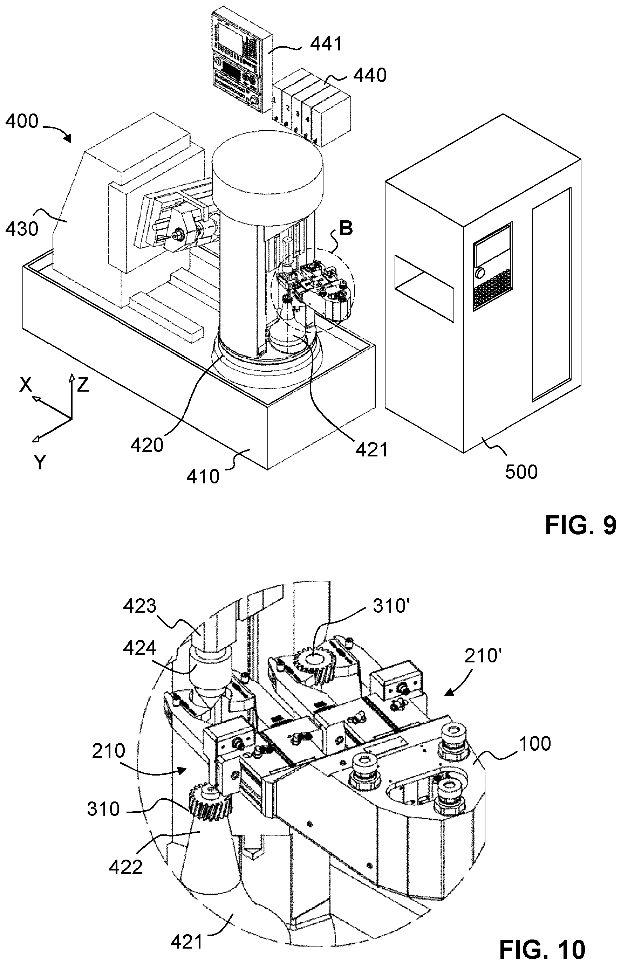

- Fig. 9: eine Verzahnmaschine mit der Greifvorrichtung der Fig. 2 in einer schematischen perspektivischen Ansicht; und
- Fig. 10: eine vergrösserte Ansicht des Ausschnitts B in der Fig. 9.

### BESCHREIBUNG BEVORZUGTER AUSFÜHRUNGSFORMEN

### Einzelne Greifereinheit

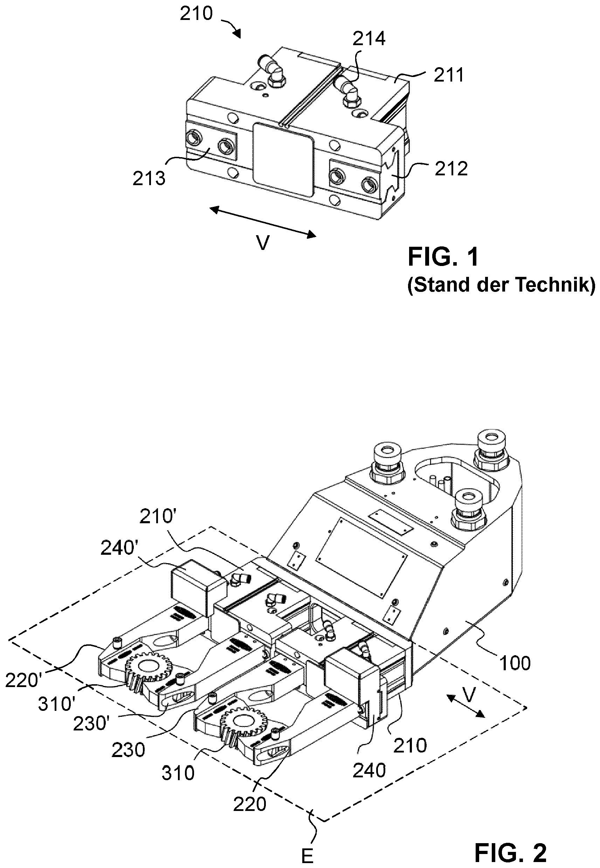

In der Fig. 1 ist eine an sich aus dem Stand der Technik bekannte Greifereinheit 210 dargestellt. Es handelt sich hierbei um einen pneumatisch angetriebenen Zweibacken-Parallelgreifer, wie er in vielen verschiedenen Varianten kommerziell erhältlich ist. Die Greifereinheit 210 umfasst einen Grundkörper 211, in der ein nicht separat dargestellter pneumatischer Antrieb aufgenommen ist. Über Schlauchanschlüsse 214 wird der Antrieb mit Druckluft beaufschlagt. Die Greifereinheit 210 umfasst ausserdem zwei Basisbacken 212, 213, die am Grundkörper 211 kollinear entlang einer Verschieberichtung V geführt sind. Die Basisbacken 212, 213 sind durch den Antrieb gegenüber dem Grundkörper 210 synchron in entgegengesetzte Richtungen aufeinander zu oder voneinander weg verschiebbar. Im Grundkörper 210 kann je nach Ausführungsform eine Rückstellfeder vorhanden sein, die im antriebslosen Zustand die Basisbacken 212, 213 mit einer schliessend oder öffnend wirkenden Rückstellkraft beaufschlagt.

### Ausführung als Doppelgreifer

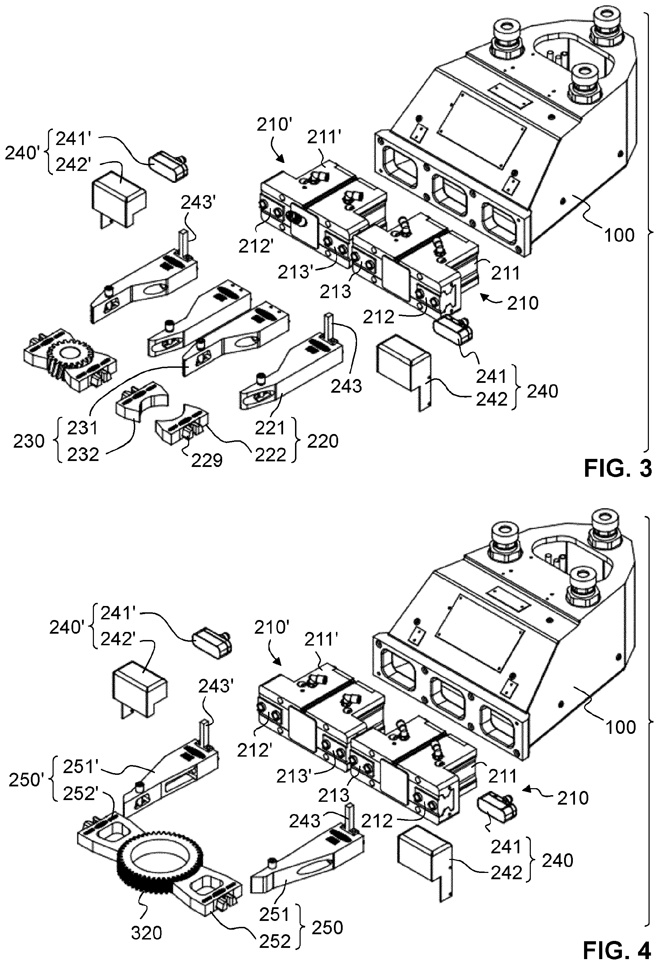

Die Figuren 2 und 3 zeigen eine Greifvorrichtung in Form eines Greifarms mit zwei Greifereinheiten 210, 210', wobei jede dieser Greifereinheiten gemäss Fig. 1 aufgebaut ist. Die Greifereinheiten 210, 210' sind nebeneinander an einem gemeinsamen Halter 100 in Form eines Schwenkarms montiert. Sie sind im Wesentlichen identisch aufgebaut und spiegelbildlich zueinander bezüglich einer mittig zwischen den Greifereinheiten 210, 210' verlaufenden vertikalen Spiegelebene montiert. Auch die mit jeder Greifereinheiten verbundenen weiteren Komponenten sind jeweils spiegelbildlich zu den Komponenten an der anderen Greifereinheit angeordnet.

Die in der Fig. 2 rechts angeordnete Greifereinheit sowie alle damit verbundenen Komponenten werden im Folgenden mit Bezugszeichen ohne Hochstrich bezeichnet. Die in der Fig. 2 links angeordnete Greifereinheit und alle damit verbundenen Komponenten werden mit denselben Bezugszeichen mit einem Hochstrich bezeichnet.

Die Basisbacken 212, 213, 212', 213' der beiden Greifereinheiten 210, 210' sind alle kollinear zueinander entlang der Verschieberichtung V in einer gemeinsamen Greiferebene E verschiebbar. Diejenige Basisbacke 213, 213' jeder Greifereinheit, die benachbart zu einer Basisbacke der jeweils anderen Greifereinheit angeordnet ist, wird im Folgenden als "innere Basisbacke" bezeichnet, die anderen beiden Basisbacken 212, 212' werden als "äussere Basisbacken" bezeichnet. Die inneren Basisbacken 213, 213' sind bezüglich der Verschieberichtung V zwischen den äusseren Basisbacken 212, 212' angeordnet.

In der Ausführung der Figuren 2 und 3 ist die Greifvorrichtung als Doppelgreifer ausgebildet. Dazu ist auf jeder der Basisbacken 212, 213, 212', 213' jeweils ein Greiferfinger 220, 230, 220', 230' montiert. Die Greiferfinger 220, 230 auf den Basisbacken 212, 213 der ersten Greifereinheit 210 sind so ausgebildet und angeordnet, dass zwischen ihnen ein zahnradförmiges Werkstück 310 aufgenommen werden kann. Zum Ergreifen des Werkstücks 310 bewegt die erste Greifereinheit 210 die Basisbacken 212, 213 synchron aufeinander zu, vorzugsweise unter Wirkung einer schliessend wirkenden Rückstellkraft einer Rückstellfeder. Dadurch wird das Werkstück 310 kraftschlüssig durch eine nach innen gerichtete Greifkraft zwischen den Greiferfingern 220, 230 gehalten. Zum Freigeben des Werkstücks 310 bewegt die erste Greifereinheit 210 die Basisbacken 212, 213 synchron voneinander weg. Spiegelsymmetrisch zu den Greiferfingern 220, 230 auf der ersten Greifereinheit 210 sind auch die Greiferfinger 220', 230' auf der zweiten Greifereinheit 210' so ausgebildet und angeordnet, dass zwischen ihnen ein weiteres Werkstück 310' aufgenommen werden kann. Zum Ergreifen und Freigeben des Werkstücks 310' bewegt die zweite Greifereinheit 210' die Basisbacken 212', 213' synchron aufeinander zu bzw. voneinander weg. Dies erfolgt unabhängig von der Betätigung der ersten Greifereinheit 210. Insgesamt können so unabhängig voneinander zwei Werkstücke mit der Greifvorrichtung aufgenommen und abgelegt werden.

Die Greiferfinger 220, 230, 220', 230' sind modular aufgebaut. So umfasst der Greiferfinger 220 einen Grundfinger 221 und eine Greiferbacke 222. Der Grundfinger 221 hat ein proximales und ein distales Ende. An seinem proximalen Ende ist der Grundfinger 221 lösbar auf der äusseren Basisbacke 212 der ersten Greifereinheit 210 montiert. Die Montage kann z.B. durch eine nicht illustrierte Verschraubung erfolgen. Um die Positioniergenauigkeit zu erhöhen, können auf den Basisbacken in an sich bekannter Weise Positionierhülsen vorgesehen sein. Die Greiferbacke 222 ist in einem zwischen dem proximalen und dem distalen Ende gelegenen Bereich des Grundfingers 221 lateral am Grundfinger 221 montiert. Auch diese Verbindung ist lösbar. Im vorliegenden Beispiel erfolgt die Montage der Greiferbacke 222 am Grundfinger 221 durch eine Schnellwechseleinrichtung, die nachstehend noch näher erläutert wird. Der Greiferfinger 230 ist analog zum Greiferfinger 220 aufgebaut, ebenfalls mit einem Grundfinger 231 und einer Greiferbacke 232. Die Greiferbacken 222, 232 weisen zueinander hin, so dass sie das Werkstück 310 zwischen sich aufnehmen können. Dabei kontaktiert jede Greiferbacke das Werkstück 310 an mindestens zwei Stellen entlang seines Umfangs, um ein Kippen des Werkstücks zu verhindern. Die Greiferfinger 220', 230' entsprechen in ihrem Aufbau spiegelbildlich den Greiferfingern 220, 230.

Durch den modularen Aufbau können die Greiferfinger sehr schnell und einfach an verschiedene Werkstücke, z.B. an Zahnräder mit unterschiedlichen Durchmessern, angepasst werden, indem lediglich die Greiferbacken ausgetauscht werden.

Jede der Greifereinheiten 210, 210' ist mit einer Positionserfassungseinrichtung 240, 240' versehen, um den Betriebszustand der jeweiligen Greifereinheit 210, 210' zu ermitteln. Die Positionserfassungseinrichtung 240, 240' bestimmt jeweils die Position eines Targets 243, 243', das sich auf dem jeweils äusseren Greiferfinger 220, 220' nahe von dessen proximalem Ende befindet. Sie umfasst im vorliegenden Beispiel jeweils einen induktiven Positionssensor (Wegaufnehmer) 241, 241'. Entsprechend ist das Target 243, 243' zumindest teilweise aus einem weichmagnetischen Material wie einem entsprechenden Stahl gefertigt. Zum Schutz der Positionssensoren umfasst jede Positionserfassungseinrichtung 240, 240' ein Gehäuse 242, 242', das am Grundkörper 211, 211' der jeweiligen Greifereinheit 210, 210' montiert ist und sowohl den jeweiligen Positionssensor 241, 241' als auch das jeweilige Target 243, 243' überdeckt.

### Ausführung als Einfachgreifer

In der Fig. 4 ist der Umbau zu einem Einfachgreifer illustriert. Die Greiferfinger 220, 230, 220', 230', die für den Betrieb als Doppelgreifer verwendet wurden, werden dazu von den inneren und äusseren Basisbacken 212, 213, 212', 213' entfernt. Stattdessen werden auf den äusseren Basisbacken 212, 212' nun zwei andere Greiferfinger 250, 250' montiert. Die inneren Basisbacken 213, 213' bleiben frei oder werden mit einer Abdeckung geschützt. Sie nehmen an den Greifvorgängen nicht mehr teil.

Die Greiferfinger 250, 250' sind wiederum modular aufgebaut, jeweils mit einem Grundfinger 251, 251' und einer Greiferbacke 252, 252'. Die Grundfinger 251, 251' und Greiferbacken 252, 252' sind nun so dimensioniert, dass zwischen den Greiferfingern 250, 250' ein grösseres Werkstück 320 aufgenommen werden kann.

Um das Werkstück 320 zu ergreifen oder abzulegen, werden die Antriebe der beiden Greifereinheiten 210, 210' derart gekoppelt angesteuert, dass sich die äusseren Basisbacken 212, 212' der beiden Greifereinheiten 210, 210' synchron aufeinander zu bzw. voneinander weg bewegen.

Da jede der beiden äusseren Basisbacken 212, 212' zu einer anderen Greifereinheit 210, 210' mit eigenem Antrieb und ggfs. mit eigener Rückstellfeder gehört, kann mit dieser Anordnung die doppelte Greifkraft gegenüber einer einzelnen Greifereinheit 210 erzielt werden. Das ist bei grösseren Werkstücken von besonderem Vorteil.

Die Greiferfinger 250, 250' tragen wieder jeweils ein Target 243, 243', um mit den Positionserfassungseinrichtungen 240, 240' den Betriebszustand beider Greifereinheiten 210, 210' zu ermitteln.

Ein Umbau in umgekehrter Richtung, vom Einfachgreifer zum Doppelgreifer, ist ohne Weiteres ebenfalls möglich.

### Schnellwechseleinrichtung für Greiferbacke

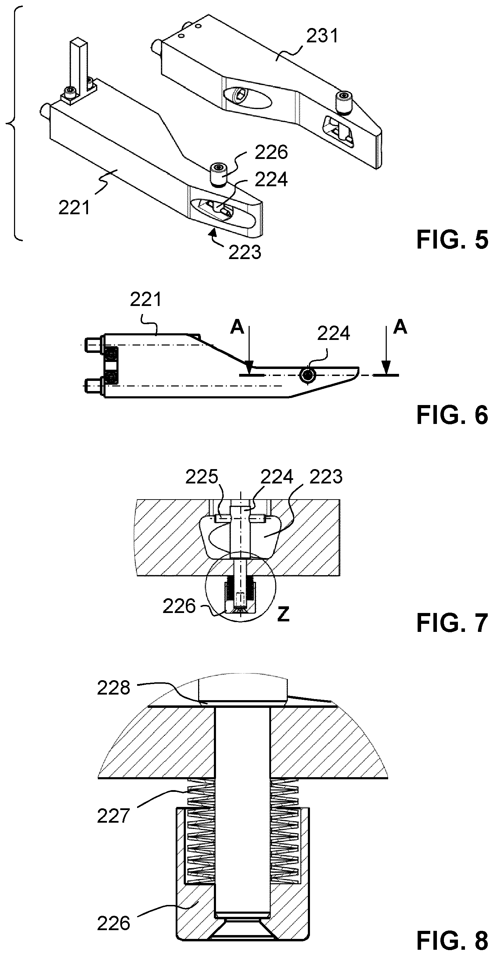

Anhand der Figuren 5 bis 8 wird die Montage der Greiferbacke 222 am zugeordneten Grundfinger 221 näher erläutert. Die Montage der anderen Greiferbacken am jeweiligen Grundfinger erfolgt auf dieselbe Weise.

Wie in der Fig. 3 erkennbar ist, weist die Greiferbacke 222 zwei parallele Befestigungsnocken 229 auf. Der langgestreckte Grundfinger 221 definiert mit seiner Haupterstreckungsrichtung eine Fingerlängsrichtung. Wie insbesondere in den Figuren 5 und 7 erkennbar ist, ist am Grundfinger 221 quer zur Fingerlängsrichtung eine laterale Einführöffnung 223 ausgebildet. Die beiden Befestigungsnocken 229 der Greiferbacke 222 sind quer zur Fingerlängsrichtung in die Einführöffnung 223 einschiebbar. Am Grundfinger 221 ist ein Fixierstift 224 angebracht. Der Fixierstift 224 definiert eine Stiftlängsachse. Er ist entlang der Stiftlängsachse gegenüber dem Grundfinger 221 quer zur Fingerlängsrichtung und quer zur Einführrichtung der beiden Befestigungsnocken 229 verschiebbar. Wenn die Befestigungsnocken 229 in die Einführöffnung 223 eingeschoben sind, erstreckt sich der Fixierstift durch einen zwischen den Befestigungsnocken 229 gelegenen Bereich der Einführöffnung 223. Quer durch den Fixierstift 224 hindurch erstreckt sich ein Querstift 225. Der Querstift 225 bildet beidseitig vom Fixierstift 224 jeweils einen Rastvorsprung, der in eine entsprechende Ausnehmung auf der Unterseite der Befestigungsnocken 229 einrastet, wenn die Befestigungsnocken 229 in die Einführöffnung 223 eingeschoben werden. Er stellt auf diese Weise eine lösbare Rastverbindung zwischen der Greiferbacke 222 und dem Grundfinger 221 her. Der Fixierstift 224 erstreckt sich mit einem Ende in einen ausserhalb des Grundfingers 221 gelegenen Bereich. In diesem Bereich ist er von einer Schraubenfeder 227 umgeben. Am betreffenden Ende des Fixierstifts 224 ist ein Bestätigungselement in Form einer Kappe 226 angebracht. Die Kappe 226 bildet mit ihrer inneren Stirnfläche einen Gegenanschlag für die Schraubenfeder 227. Die Schraubenfeder 227 ist zwischen der Aussenfläche des Grundfingers 221 und der Kappe 226 komprimierbar, um den Fixierstift 224 in Richtung der Stellung, in der der Querstift 225 die Befestigungsnocken 229 fixiert, mit einer Federkraft zu belasten. Dabei begrenzt ein umlaufener Kragen 228 am Fixierstift 224 den Bewegungsbereich des Fixierstifts 224 in Richtung der Federkraft und stellt eine gewisse Federvorspannung sicher. Durch axialen Druck auf die Kappe 226 und die dadurch verursachte Verschiebung des Fixierstifts 224 entlang seiner Stiftlängsachse wird der Querstift 225 aus den Ausnehmungen der Befestigungsnocken 229 heraus gerückt. Dadurch ist die lösbare Rastverbindung wieder lösbar. Die Kappe 226 wirkt insofern als Druckknopf.

### Anwendung in Verzahnmaschine

Eine wichtige Anwendung der vorgeschlagenen Greifvorrichtung ist der Werkstückwechsel in einer Verzahnmaschine. Dies ist beispielhaft in den Figuren 5 und 6 illustriert, in denen ein Beispiel einer Verzahnmaschine 400 dargestellt ist. Die Verzahnmaschine 400 weist in an sich bekannter Weise ein Maschinenbett 410, einen Werkstückträger 420, einen Werkzeugträger 430 und eine Maschinensteuerung 440 mit Bedientafel 441 auf.

Der Werkstückträger 420 ist als Drehturm ausgebildet. Er trägt zwei Werkstückspindeln 421, die bezüglich der vertikalen Schwenkachse des Drehturms um 180° versetzt zueinander angeordnet sind. In der Fig. 5 ist nur eine dieser Werkstückspindeln sichtbar. Diese Werkstückspindel befindet sich in einer Werkstückwechselposition, in der ein Fertigteil von der Werkstückspindel entnommen werden kann und ein neues Rohteil aufgespannt werden kann. Die andere Werkstückspindel ist in der Fig. 5 durch den Drehturm verdeckt. Sie befindet sich in einer Bearbeitungsposition, in der ein zuvor aufgespanntes Werkstück durch das Werkzeug auf dem Werkzeugträger 430 in an sich bekannter Weise bearbeitet werden kann.

Um ein Werkstück auf derjenigen Werkstückspindel 421, die sich in der Werkstückwechselposition befindet, auszuwechseln, wird im Beispiel der Fig. 5 die vorstehend beschriebene Greifvorrichtung im Doppelgreiferbetrieb eingesetzt. Die als Greifarm ausgebildete Greifvorrichtung ist an einem nicht dargestellten Greifarmträger befestigt. Der Greifarmträger ist stationär neben dem Maschinenbett 410 angeordnet, aus Gründen der Entkopplung von Schwingungen aber nicht mit dem Maschinenbett verbunden. Die Greifvorrichtung ist derart am Greifarmträger befestigt, dass sie durch entsprechende Antriebe um eine parallel zur Z-Richtung verlaufende vertikale Schwenkachse gegenüber dem Greifarmträger verschwenkbar und in Z-Richtung (d.h. entlang der Vertikalen) linear verfahrbar ist.

In einer Werkstückaufspannung 422 der Werkstückspindel 421 befindet sich ein fertig bearbeitetes Werkstück 310 (Fertigteil). Der zugeordnete Reitstock 423 mit Zentrierspitze 424 ist nach oben zurückgezogen. Die Greifvorrichtung wird von einer Position, in der sie sich ausserhalb des Arbeitsraums der Verzahnmaschine 400 befindet, in die in den Figuren 5 und 6 dargestellte Schwenkposition eingeschwenkt und wird in Z-Richtung abgesenkt, so dass die erste Greifereinheit 210 mit den daran angebrachten Greiferfingern das Fertigteil 310 von der Werkstückspindel aufnehmen kann. Die Greifvorrichtung entfernt das Fertigteil 310 durch eine kurze Hubbewegung von der Werkstückaufspannung 422. Die zweite Greifereinheit 210' hält währenddessen schon das nächste zu bearbeitende Werkstück (Rohteil) 310' bereit. Die Greifvorrichtung wird nun um einen geringen Betrag weiter verschwenkt, so dass das Rohteil 310' über der Werkstückaufspannung 422 zu liegen kommt, und wird erneut in Z-Richtung abgesenkt, so dass das Rohteil 310' auf der Werkstückaufspannung 422 abgelegt werden kann. Das Rohteil 310' wird nun auf der Werkstückaufspannung 422 aufgespannt. Die Greifvorrichtung wird wieder in Z-Richtung angehoben und aus dem Arbeitsraum zu einem Werkstückspeicher 500 ausgeschwenkt. Dort wird das zuvor von der Greifereinheit 210 aufgenommene Fertigteil 310 abgelegt, und es wird ein neues Rohteil mit der Greifereinheit 210' aufgenommen. Währenddessen wird das Rohteil 310' mit Hilfe der Zentrierspitze 424 zusätzlich fixiert und zentriert, und mit einer nicht dargestellten Einzentriervorrichtung wird eine Einzentrieroperation durchgeführt, um die Winkellage der Verzahnung des Rohteils 310' relativ zur Werkstückspindelachse zu ermitteln. Der Werkzeugträger 420 wird nun um 180° verschwenkt, so dass die Werkstückspindel 421 mit dem darauf aufgespannten Rohteil 310' in die Bearbeitungsposition gelangt, während die andere Werkstückspindel mit einem darauf befindlichen weiteren Fertigteil in die Werkstückwechselposition gelangt. Das Rohteil 310' wird nun durch das Werkzeug bearbeitet, und der beschriebene Zyklus wird für das weitere Fertigteil wiederholt.

Der Werkstückwechsel erfolgt also, während ein anderes Werkstück bearbeitet wird. Der Werkstückwechsel erfolgt dabei sehr schnell, denn es sind nur wenige kurze Hub- und Schwenkbewegungen erforderlich, um ein Fertigteil von einer der Werkstückspindeln zu entnehmen und durch ein neues Rohteil zu ersetzen. Insbesondere braucht die Greifvorrichtung dazu nicht zwischen dem Arbeitsraum der Verzahnmaschine 400 und dem Werkstückspeicher 500 verschwenkt zu werden. Dadurch kann der gesamte Werkstückwechsel innerhalb der Hauptzeit erfolgen, in der das andere Rohteil bearbeitet wird, und unproduktive Nebenzeiten werden minimiert.

Allerdings ist der Betrieb als Doppelgreifer nur für verhältnismässig kleine Werkstücke möglich. Wenn grössere Werkstücke bearbeitet werden sollen, wird die Greifvorrichtung daher für den Betrieb als Einfachgreifer umgebaut, wie dies vorstehend beschrieben wurde. Mit dem Einfachgreifer können nun wesentlich grössere Werkstücke be- und entladen werden. Der maximale Durchmesser der Werkstücke, die im Einfachgreiferbetrieb gehandhabt werden können, kann den maximalen Durchmesser der Werkstücke, die im Doppelgreiferbetrieb gehandhabt werden können, um mehr als das 2.5-Fache übersteigen. Nach wie vor ist ein Werkstückwechsel parallel zur Hauptzeit möglich. Allerdings muss die Greifvorrichtung nun zwischen dem Entnehmen des Fertigteils und dem Aufspannen des nächsten Rohteils vollständig zwischen dem Arbeitsraum der Verzahnmaschine 400 und dem Werkstückspeicher 500 hin und her verschwenkt werden. Dies benötigt mehr Zeit als die kurzen Hub- und Schwenkbewegungen des Doppelgreifers. Andererseits benötigt aber auch die Bearbeitung von grösseren Werkstücken in der Regel mehr Zeit, so dass auch hier trotz insgesamt grösserer Taktzeit die unproduktiven Nebenzeiten klein gehalten werden können.

### Steuerung und Zustandsüberwachung

Sämtliche Bewegungen der Greifvorrichtung relativ zum Greifarmträger sowie die Betätigungen der beiden Greifereinheiten 210, 210' werden durch eine Steuerungseinrichtung, kurz "Steuerung", gesteuert. Dazu kann eine separate Steuerung vorgesehen sein. Alternativ kann diese Aufgabe auch durch die Steuerung 440 der Werkzeugmaschine oder durch eine Steuerung des Werkstückspeichers 500 wahrgenommen werden. Dazu weist die entsprechende Steuerung entsprechende Software auf.

Die Software kann insbesondere zwischen zwei Betriebsmodi unterscheiden: einem ersten Modus, in dem die Greifvorrichtung als Doppelgreifer betrieben wird, und einem zweiten Modus, in dem die Greifvorrichtung als Einfachgreifer betrieben wird. Im ersten Betriebsmodus werden die beiden Greifereinheiten unabhängig voneinander geöffnet und geschlossen, während im zweiten Betriebsmodus die beiden Greifereinheiten simultan gekoppelt geöffnet und geschlossen werden.

Die Umschaltung zwischen den Betriebsmodi kann manuell durch eine entsprechende Eingabe auf der Bedientafel erfolgen. Es ist aber auch denkbar, an den Basisbacken der Greifereinheiten Anwesenheitssensoren vorzusehen, die feststellen, ob auf der betreffenden Basisbacke ein Greiferfinger angebracht ist, und anhand der Signale dieser Sensoren automatisch zwischen dem ersten und zweiten Betriebsmodus umzuschalten.

Die Steuerung empfängt vorzugsweise Positionssignale für die beiden Greifereinheiten von den Positionserfassungseinrichtungen 240, 240'. Anhand dieser Positionssignale kann sie insbesondere zwischen den folgenden Zuständen unterscheiden:
- zugeordnete Greifereinheit ist offen;
- zugeordnete Greifereinheit ist vollständig geschlossen; und
- zugeordnete Greifereinheit ist teilweise geschlossen, Werkstück ergriffen.

Ausserdem ist es möglich, zu prüfen, ob die ermittelte Stellung der Greifereinheiten im Zustand "Werkstück ergriffen" der erwarteten Stellung entspricht. Weicht die ermittelte Stellung um mehr als einen vorbestimmten Toleranzbereich (z.B. ±1 mm) von der erwarteten Stellung ab, kann die Steuerung auf einen Fehler schliessen, und die weitere Bearbeitung kann gestoppt werden. Auf diese Weise kann verhindert werden, dass Rohteile mit einem falschen Durchmesser auf die Werkstückspindel gelangen, wo sie die Einzentriervorrichtung und/oder das Bearbeitungswerkzeug beschädigen könnten.

### Modifikationen

Selbstverständlich kann eine grosse Zahl von Abwandlungen vorgenommen werden, ohne den Bereich der Erfindung, wie sie in den Ansprüchen angegeben ist, zu verlassen.

Beispielsweise können die Greifereinheiten entlang der Verschieberichtung V einen grösseren Abstand als im vorstehend dargestellten Ausführungsbeispiel aufweisen, um im Einzelgreiferbetrieb noch grössere Werkstücke aufnehmen zu können. Zur Anpassung an verschiedene Durchmesser können die Greifereinheiten 210, 210' am Halter 100 entlang der Verschieberichtung V verschiebbar montiert sein. Dazu kann der Halter 100 optional eine entsprechende Schiene aufweisen, an der die Greifereinheiten verschiebbar montiert sind.

Die Greifereinheiten können statt als Zweibacken-Parallelgreifer auch als Zweibacken-Winkelgreifer ausgebildet sein. Dementsprechend werden die Basisbacken nicht gegenüber dem Grundkörper der jeweiligen Greifereinheit linear verfahren, sondern verschwenkt. Die Schwenkbewegung erfolgt dabei für alle Basisbacken weiterhin in der Greiferebene E. Um Kollisionen zu vermeiden, werden die Greifereinheiten in diesem Fall vorzugsweise mit einem etwas grösseren Abstand entlang der Richtung V als im vorstehend dargestellten Ausführungsbeispiel montiert.

Die Greifereinheiten können elektrisch statt pneumatisch angetrieben sein.

Die Schnellwechseleinrichtung für die Greiferbacken kann auch anders als dargestellt ausgebildet werden. Insbesondere kann das Betätigungselement statt als Kappe auch als flache Scheibe ausgebildet sein. Statt durch einen Querstift können Rastvorsprünge am Fixierstift auch auf andere Weise ausgebildet sein.

Die Greifvorrichtung kann nicht nur für aussenverzahnte Zahnräder (Stirnräder) verwendet werden, sondern auch für andere Arten von Werkstücken, insbesondere andere Arten von Werkstücken mit zylindrischer Aussenkontur. Eine Anpassung an verschiedene Werkstücke ist in sehr kurzer Zeit durch Austausch der Greiferbacken möglich.

Auch ist es denkbar, die Greifvorrichtung zum Aufnehmen von innenverzahnten Zahnrädern oder anderen Gegenständen am Innenumfang einzusetzen. Die Greiferfinger können dazu z.B. mit nach unten vorstehenden Zapfen oder nach unten vorstehenden und nach aussen gerichteten Greiferbacken versehen werden. Zum Aufnehmen eines Gegenstands führen die Greifereinheiten in diesem Fall Öffnungs- statt Schliessbewegungen aus. Entsprechend kann es aus Sicherheitsgründen von Vorteil sein, Greifvorrichtungen einzusetzen, deren Rückstellfeder eine öffnend wirkende Rückstellkraft erzeugt.

Statt induktiv wirkender Positionssensoren (Wegaufnehmer) können zur Erfassung des Betriebszustands auch andere Arten von Positionssensoren eingesetzt werden, z.B. optische Abstandssensoren oder Wirbelstromsensoren.

### BEZUGSZEICHENLISTE

| | | | |
|---|---|---|---|
| 100 | Halter | 242 | Abdeckung |
| 210, 210' | Greifereinheit | 243 | Target |
| 211, 211' | Grundkörper | 250, 250' | Greiferfinger |
| 212, 212' | äussere Basisbacke | 251, 251' | Grundfinger |
| 213, 213' | innere Basisbacke | 252, 252' | Greiferbacke |
| 214 | Schlauchanschluss | 310, 310' | Werkstück |
| 220, 220' | äusserer Greiferfinger | 320 | Werkstück |
| 221, 231 | Grundfinger | 410 | Maschinenbett |
| 222, 232 | Greiferbacke | 420 | Werkstückträger |
| 223 | Einführoffnung | 421 | Werkstückspi ndel |
| 224 | Fixierstift | 422 | Werkstückaufspannung |
| 225 | Querstift | 423 | Reitstock |
| 226 | Kappe | 424 | Zentrierspitze |
| 227 | Schraubenfeder | 430 | Werkzeugträger |
| 228 | Kragen | 440 | Maschinensteuerung |
| 229 | Befestigungsnocken | 441 | Bedientafel |
| 230, 230' | innerer Greiferfinger | 500 | Werkstückspeicher |
| 240 | Positionserfassungssystem | E | Greiferebene |
| 241 | Positionserfassungseinrichtung | | |

## Patentansprüche

1. Greifvorrichtung, aufweisend:
einen Halter (100);
zwei Greifereinheiten (210, 210'),
wobei jede der Greifereinheiten (210, 210') einen Grundkörper (211; 211') mit einem Antrieb und zwei Basisbacken (212, 213; 212', 213') aufweist, wobei die Basisbacken (212, 213; 212', 213') durch den Antrieb gegenüber dem Grundkörper (211; 211') synchron gegenläufig bewegbar sind,
wobei die beiden Greifereinheiten (210, 210') derart nebeneinander am Halter (100) angeordnet sind, dass die Basisbacken (212, 213; 212', 213') beider Greifereinheiten (210, 210') parallel zu einer gemeinsamen Greiferebene (E) bewegbar sind, wobei eine der Basisbacken jeder Greifereinheit (210, 210') eine innere Basisbacke (213; 213') ist, und wobei die andere Basisbacke jeder Greifereinheit eine äussere Basisbacke (212; 212') ist, wobei inneren Basisbacken (212, 212') der beiden Greifereinheiten zwischen den äusseren Basisbacken (213, 213') der beiden Greifereinheiten angeordnet sind,
**dadurch gekennzeichnet,**
**dass** die Greifvorrichtung als Einfachgreifer ausgebildet ist, indem an jeder der äusseren Basisbacken (212, 212') jeweils ein erster Greiferfinger (250; 250') angebracht ist, so dass mit den ersten Greiferfingern (250, 250') ein erster Gegenstand (320) aufnehmbar ist, während die inneren Basisbacken (213, 213') keine Greiferfinger zum Aufnehmen von Gegenständen tragen.

2. Greifvorrichtung nach Anspruch 1, ausserdem aufweisend eine Steuerung (440), die dazu ausgebildet ist, in einem ersten Betriebsmodus die Antriebe der beiden Greifereinheiten (210, 210') derart gekoppelt anzusteuern, dass die äusseren Basisbacken (212, 212') der beiden Greifereinheiten (210, 210') synchron gegenläufig bewegt werden.

3. Greifvorrichtung nach Anspruch 1 oder 2, wobei die Greifvorrichtung zu einem Doppelgreifer umrüstbar ist, indem zwei weitere erste Greiferfinger an den inneren Basisbacken (213, 213') angebracht werden, oder indem die beiden ersten Greiferfinger (250, 250') von den äusseren Basisbacken (212, 212') entfernt werden und an jeder der äusseren und inneren Basisbacken (212, 213, 212', 213') jeweils ein zweiter Greiferfinger (220, 230, 220', 230') angebracht wird, so dass mit jeder der beiden Greifereinheiten (210, 210') jeweils ein zweiter Gegenstand (310, 310') aufnehmbar ist.

4. Greifvorrichtung nach Anspruch 3, aufweisend:
zwei weitere erste Greiferfinger, die dazu ausgebildet sind, an den inneren Basisbacken (213, 213') beiden Greifereinheiten (210, 210') angebracht zu werden, oder
vier zweite Greiferfinger (220, 230, 220', 230'), die dazu ausgebildet sind, nach Entfernung der ersten Greiferfinger (250, 250') auf jeweils einer der Basisbacken (212, 213, 212', 213') der beiden Greifereinheiten (210, 210') angebracht zu werden, so dass mit jeder der beiden Greifereinheiten (210, 210') jeweils unabhängig ein zweiter Gegenstand (310, 310') aufnehmbar ist.

5. Greifvorrichtung nach Anspruch 2 in Verbindung mit Anspruch 3 oder 4, wobei die Steuerung in einen zweiten Betriebsmodus umschaltbar ist, in dem sie die beiden Greifereinheiten (210, 210') unabhängig voneinander ansteuert.

6. Greifvorrichtung nach einem der vorhergehenden Ansprüche, wobei jede der Greifereinheiten (210, 210') eine Positionserfassungseinrichtung (240, 240') aufweist, die dazu ausgebildet ist, eine Position eines Targets (243, 243') auf demjenigen Greiferfinger (220, 220') zu bestimmen, der auf der äusseren Basisbacke (212, 212') der jeweiligen Greifereinheit (210, 210') angebracht ist.

7. Greifvorrichtung nach Anspruch 6, wobei die Positionserfassungseinrichtung (240, 240') einen induktiven Positionssensor (241, 241') umfasst, und wobei das Target (243, 243') ein weichmagnetisches Material enthält.

8. Greifvorrichtung nach einem der vorhergehenden Ansprüche, wobei jeder der ersten und/oder zweiten Greiferfinger (250, 250'; 220, 230, 220', 230') aufweist:
einen Grundfinger (251; 251'; 221; 231) und
eine Greiferbacke (252; 252'; 222; 232),
wobei der Grundfinger (251; 251'; 221; 231) mit einer der Basisbacken (212; 213, 212', 213') lösbar verbindbar ist, und
wobei die Greiferbacke (252; 252'; 222; 232) lösbar mit dem Grundfinger (251; 251'; 221; 231) verbunden ist.

9. Greifvorrichtung nach Anspruch 8, wobei die Greiferbacke (252; 252'; 222; 232) mit dem Grundfinger (251; 251'; 221; 231) durch eine lösbare Rastverbindung verbindbar ist.

10. Greifvorrichtung nach Anspruch 9,
wobei die Greiferbacke (252; 252'; 222; 232) mindestens einen Befestigungsnocken (229) aufweist,
wobei der Grundfinger (251; 251'; 221; 231) eine Fingerlängsrichtung definiert und eine sich quer zur Fingerlängsrichtung erstreckende laterale Einführöffnung (223) aufweist, in die der mindestens eine Befestigungsnocken (229) der Greiferbacke (252; 252'; 222; 232) quer zur Fingerlängsrichtung einschiebbar ist,
wobei am Grundfinger (251; 251'; 221; 231) ein federbelasteter Fixierstift (224) mit einem sich in die Einführöffnung (223) erstreckenden Rastvorsprung, insbesondere in Form eines Querstifts (225), vorgesehen ist, und
wobei der Fixierstift (224) derart ausgebildet und angeordnet ist, dass der Rastvorsprung in eine Ausnehmung des Befestigungsnockens (229) einrastet, wenn der Befestigungsnocken (229) in die Einführöffnung (223) eingeschoben ist, um die lösbare Rastverbindung herzustellen, und dass die lösbare Rastverbindung durch Druck auf ein am Fixierstift (224) ausgebildetes oder mit diesem verbundenes Betätigungselement (226) lösbar ist.

11. Verzahnmaschine, aufweisend eine Greifvorrichtung nach einem der vorhergehenden Ansprüche, wobei die ersten und/oder zweiten Greiferfinger (250, 250'; 220, 230, 220', 230') zum Aufnehmen von verzahnten Werkstücken ausgebildet sind.

12. Verwendung einer Greifvorrichtung nach einem der Ansprüche 1 bis 10 zum Aufnehmen von verzahnten Werkstücken, insbesondere für einen Werkstückwechsel in einer Verzahnmaschine (400).

13. Verfahren zum Betrieb einer Greifvorrichtung nach einem der Ansprüche 1 bis 10, umfassend:
Aufnehmen eines Gegenstands (320) mit den ersten Greiferfingern (250, 250'), indem die Antriebe der beiden Greifereinheiten (210, 210') derart gekoppelt angesteuert werden, dass die äusseren Basisbacken (212, 212') der beiden Greifereinheiten (210, 210') synchron gegenläufig bewegt werden.

14. Verfahren nach Anspruch 13, umfassend:
Umrüsten der Greifvorrichtung vom Einfachgreifer zum Doppelgreifer, indem entweder zwei weitere erste Greiferfinger an den inneren Basisbacken (213, 213') angebracht werden, oder indem die beiden ersten Greiferfinger (250, 250') von den äusseren Basisbacken (212, 212') entfernt werden und an jeder der äusseren und inneren Basisbacken (212, 213, 212', 213') jeweils ein zweiter Greiferfinger (220, 230, 220', 230') angebracht wird; und
optional, unabhängiges Ansteuern der Antriebe der beiden Greifereinheiten (210, 210') nach dem Umrüsten zum Doppelgreifer derart, dass die Basisbacken (212, 213; 212', 213') jeder der beiden Greifereinheiten (210, 210') unabhängig von den Basisbacken der jeweils anderen Greifereinheit synchron gegenläufig bewegt werden.

15. Verfahren nach Anspruch 13 oder 14, umfassend:
Bestimmen einer Position jeweils eines Targets (243) auf denjenigen Greiferfingern (220, 220'), die auf den äusseren Basisbacken (212, 212') der beiden Greifereinheiten (210, 210') angebracht sind.

## Claims

1. A gripping device, comprising:
a holder (100); and
two gripper units (210, 210'),
wherein each of the gripper units (210, 210') comprises a base body (211; 211') with a drive and two base jaws (212, 213; 212', 213'), wherein the base jaws (212, 213; 212', 213') are synchronously movable in opposite directions relative to the base body (211; 211') by the drive,
wherein the two gripper units (210, 210') are arranged side by side on the holder (100) in such a way that the base jaws (212, 213; 212', 213') of both gripper units (210, 210') are movable parallel to a common gripper plane (E), wherein one of the base jaws of each gripper unit (210, 210') is an inner base jaw (213; 213'), and the other base jaw of each gripper unit is an outer base jaw (212; 212'), wherein the inner base jaws (212, 212') of the two gripper units are arranged between the outer base jaws (213, 213') of the two gripper units,
**characterized in that**
the gripping device is configured as a single gripper, a first gripper finger (250; 250') being attached to each of the outer base jaws (212, 212'), so that a first object (320) can be picked up with the first gripper fingers (250, 250'), while the inner base jaws (213, 213') do not carry any gripper fingers for picking up objects.

2. The gripping device according to claim 1, further comprising a controller (440) configured to control, in a first operating mode, the drives of the two gripper units (210, 210') in a coupled manner such that the outer base jaws (212, 212') of the two gripper units (210, 210') are synchronously moved in opposite directions.

3. The gripping device according to claim 1 or 2, wherein the gripping device is convertible to a double gripper configuration by attaching two further first gripper fingers to the inner base jaws (213, 213'), or by removing the two first gripper fingers (250, 250') from the outer base jaws (212, 212') and attaching a second gripper finger (220, 230, 220', 230') to each of the outer and inner base jaws (212, 213, 212', 213'), so that the second object (310, 310') can be picked up with each of the two gripper units (210, 210').

4. The gripping device according to claim 3, comprising:
two further first gripper fingers configured to be mounted on the inner base jaws (213, 213') of both gripper units (210, 210'), or
four second gripper fingers (220, 230, 220', 230') configured to be mounted on a respective one of the base jaws (212, 213, 212', 213') of the two gripper units (210, 210') after removal of the first gripper fingers (250, 250') so that a second object (310, 310') can be picked up independently with each of the two gripper units (210, 210').

5. The gripping device according to claim 2 in combination with claim 3 or 4, wherein the controller is switchable to a second operating mode in which it controls the two gripper units (210, 210') independently of each other.

6. The gripping device according to any one of the preceding claims, wherein each of the gripper units (210, 210') comprises a position sensing device (240, 240') configured to determine a position of a target (243, 243') on that gripper finger (220, 220') that is mounted on the outer base jaw (212, 212') of the respective gripper unit (210, 210').

7. The gripping device according to claim 6, wherein the position sensing device (240, 240') comprises an inductive position sensor (241, 241'), and wherein the target (243, 243') includes a soft magnetic material.

8. The gripping device according to any one of the preceding claims, wherein each of the first and/or second gripper fingers (250, 250'; 220, 230, 220', 230') comprises:
a base finger (251; 251'; 221; 231) and
a gripper jaw (252; 252'; 222; 232),
wherein the base finger (251; 251'; 221; 231) is releasably connectable to one of the base jaws (212; 213, 212', 213'), and
wherein the gripper jaw (252; 252'; 222; 232) is releasably connected to the base finger (251; 251'; 221; 231).

9. The gripping device according to claim 8, wherein the gripper jaw (252; 252'; 222; 232) is connectable to the base finger (251; 251'; 221; 231) by a releasable snap connection.

10. The gripping device according to claim 9,
wherein the gripper jaw (252; 252'; 222; 232) includes at least one fastening cam (229),
wherein the base finger (251; 251'; 221; 231) defines a finger longitudinal direction and has a lateral insertion opening (223) extending transversely to the finger longitudinal direction, into which the at least one fastening cam (229) of the gripper jaw (252; 252'; 222; 232) can be inserted transversely to the finger longitudinal direction,
wherein a spring-loaded fixing pin (224) with a latching projection, in particular in the form of a transverse pin (225), extending into the insertion opening (223) is provided on the base finger (251; 251'; 221; 231), and
wherein the fixing pin (224) is formed and arranged such that the latching projection latches into a recess of the fastening cam (229) when the fastening cam (229) is inserted into the insertion opening (223) to establish the releasable snap connection, and that the releasable snap connection is releasable by pressure on an actuating element (226) formed on or connected to the fixing pin (224).

11. A gear cutting machine comprising a gripping device according to any one of the preceding claims, wherein the first and/or second gripper fingers (250, 250'; 220, 230, 220', 230') are configured to pick up toothed workpieces.

12. Use of a gripping device according to any of claims 1 to 10 for picking up toothed workpieces, in particular for a workpiece change in a gear cutting machine (400).

13. A method of operating a gripping device according to any one of claims 1 to 10, comprising:
picking up an object (320) with the first gripper fingers (250, 250') by controlling the drives of the two gripper units (210, 210') in a coupled manner such that the outer base jaws (212, 212') of the two gripper units (210, 210') are moved synchronously in opposite directions.

14. The method of claim 13, comprising:
converting the gripping device from a single gripper configuration to a double gripper configuration either by attaching two further first gripper fingers to the inner base jaws (213, 213') or by removing the two first gripper fingers (250, 250') from the outer base jaws (212, 212') and attaching a second gripper finger (220, 230, 220', 230') to each of the outer and inner base jaws (212, 213, 212', 213'), and
optionally, independently controlling the drives of the two gripper units (210, 210') after conversion to the double gripper configuration in such a way that the base jaws (212, 213; 212', 213') of each of the two gripper units (210, 210') are moved synchronously in opposite directions independently of the base jaws of the respective other gripper unit.

15. The method according to claim 13 or 14, comprising:
determining a position of a respective target (243) on those gripper fingers (220, 220') that are mounted on the outer base jaws (212, 212') of the two gripper units (210, 210').

## Revendications

1. Dispositif de préhension, comprenant
un support (100) ;
deux unités de préhension (210, 210'),
chacune des unités de préhension (210, 210') présentant un corps de base (211 ; 211') avec un entraînement et deux mâchoires de base (212, 213 ; 212', 213'), les mâchoires de base (212, 213 ; 212', 213') pouvant être déplacées par l'entraînement de manière synchrone en sens inverse par rapport au corps de base (211 ; 211'),
les deux unités de préhension (210, 210') étant disposées l'une à côté de l'autre sur le support (100) de telle sorte que les mâchoires de base (212, 213 ; 212', 213') des deux unités de préhension (210, 210') soient mobiles parallèlement à un plan de préhension commun (E), l'une des mâchoires de base de chaque unité de préhension (210, 210') étant une mâchoire de base intérieure (213 ; 213'), et l'autre mâchoire de base de chaque unité de préhension étant une mâchoire de base extérieure (212 ; 212'), les mâchoires de base intérieures (212, 212') des deux unités de préhension étant disposées entre les mâchoires de base extérieures (213, 213') des deux unités de préhension,
**caractérisé en ce que**
le dispositif de préhension est réalisé sous la forme d'un préhenseur simple, dans lequel un premier doigt de préhension (250 ; 250') est monté respectivement sur chacune des mâchoires de base extérieures (212, 212'), de sorte qu'un premier objet (320) puisse être saisi avec les premiers doigts de préhension (250, 250'), tandis que les mâchoires de base intérieures (213, 213') ne portent pas de doigts de préhension pour saisir des objets.

2. Dispositif de préhension selon la revendication 1, présentant en outre une commande (440) qui est conçue pour commander, dans un premier mode de fonctionnement, les entraînements des deux unités de préhension (210, 210') de manière couplée de telle sorte que les mâchoires de base extérieures (212, 212') des deux unités de préhension (210, 210') soient déplacées de manière synchrone en sens inverse.

3. Dispositif de préhension selon la revendication 1 ou 2, le dispositif de préhension pouvant être transformé en un préhenseur double en montant deux premiers doigts de préhension supplémentaires sur les mâchoires de base intérieures (213, 213'), ou en retirant les deux premiers doigts de préhension (250, 250') des mâchoires de base extérieures (212, 213'), 212') et en montant un deuxième doigt de préhension (220, 230, 220', 230') sur chacune des mâchoires de base extérieures et intérieures (212, 213, 212', 213'), de sorte qu'un deuxième objet (310, 310') puisse être saisi avec chacune des deux unités de préhension (210, 210').

4. Dispositif de préhension selon la revendication 3, comprenant :
deux premiers doigts de préhension supplémentaires qui sont adaptés pour être montés sur les mâchoires de base intérieures (213, 213') des deux unités de préhension (210, 210'), ou
quatre deuxièmes doigts de préhension (220, 230, 220', 230') qui sont adaptés pour être montés sur l'une respective des mâchoires de base (212, 213, 212', 213') des deux unités de préhension (210, 210') après enlèvement des premiers doigts de préhension (250, 250'), de sorte qu'un deuxième objet (310, 310') puisse être saisi indépendamment par chacune des deux unités de préhension (210, 210').

5. Dispositif de préhension selon la revendication 2 en relation avec la revendication 3 ou 4, dans lequel la commande peut être commutée dans un deuxième mode de fonctionnement dans lequel elle commande les deux unités de préhension (210, 210') indépendamment l'une de l'autre.

6. Dispositif de préhension selon l'une quelconque des revendications précédentes, dans lequel chacune des unités de préhension (210, 210') comprend un dispositif de détection de position (240, 240') conçu pour déterminer une position d'une cible (243, 243') sur le doigt de préhension (220, 220') qui est monté sur la mâchoire de base extérieure (212, 212') de l'unité de préhension respective (210, 210').

7. Dispositif de préhension selon la revendication 6, dans lequel le dispositif de détection de position (240, 240') comprend un capteur de position inductif (241, 241'), et dans lequel la cible (243, 243') contient un matériau magnétique doux.

8. Dispositif de préhension selon l'une quelconque des revendications précédentes, dans lequel chacun desdits premier et/ou deuxième doigts de préhension (250, 250' ; 220, 230, 220', 230') comprend :
un doigt de base (251 ; 251' ; 221 ; 231) et
une mâchoire de préhension (252 ; 252' ; 222 ; 232),
le doigt de base (251 ; 251' ; 221 ; 231) pouvant être relié de manière amovible à l'une des mâchoires de base (212 ; 213, 212', 213'), et
la mâchoire de préhension (252 ; 252' ; 222 ; 232) étant reliée de manière amovible au doigt de base (251 ; 251' ; 221 ; 231).

9. Dispositif de préhension selon la revendication 8, dans lequel la mâchoire de préhension (252 ; 252' ; 222 ; 232) peut être reliée au doigt de base (251 ; 251' ; 221 ; 231) par une liaison par encliquetage détachable.

10. Dispositif de préhension selon la revendication 9,
dans lequel la mâchoire de préhension (252 ; 252' ; 222 ; 232) comprend au moins un ergot de fixation (229),
le doigt de base (251 ; 251' ; 221 ; 231) définissant une direction longitudinale du doigt et présentant une ouverture d'insertion latérale (223) s'étendant transversalement à la direction longitudinale du doigt, dans laquelle l'au moins un ergot de fixation (229) de la mâchoire de préhension (252 ; 252' ; 222 ; 232) peut être inséré transversalement à la direction longitudinale du doigt,
dans lequel il est prévu sur le doigt de base (251 ; 251' ; 221 ; 231) une goupille de fixation (224) sollicitée par ressort avec une saillie d'encliquetage s'étendant dans l'ouverture d'introduction (223), en particulier sous la forme d'une goupille transversale (225), et
dans lequel la goupille de fixation (224) est conçue et disposée de telle sorte que la saillie d'encliquetage s'enclenche dans un évidement de l'ergot de fixation (229) lorsque l'ergot de fixation (229) est insérée dans l'ouverture d'insertion (223) afin d'établir la liaison d'encliquetage détachable, et en ce que la liaison d'encliquetage détachable peut être détachée par pression sur un élément d'actionnement (226) formé sur la goupille de fixation (224) ou relié à celle-ci.

11. Machine à tailler les engrenages, comprenant un dispositif de préhension selon l'une quelconque des revendications précédentes, dans laquelle les premiers et/ou deuxièmes doigts de préhension (250, 250' ; 220, 230, 220', 230') sont conçus pour saisir des pièces dentées.

12. Utilisation d'un dispositif de préhension selon l'une des revendications 1 à 10 pour la préhension de pièces dentées, notamment pour un changement de pièce dans une machine à tailler les engrenages (400).

13. Procédé de fonctionnement d'un dispositif de préhension selon l'une quelconque des revendications 1 à 10, comprenant :
saisir un objet (320) avec les premiers doigts de préhension (250, 250') en commandant de manière couplée les entraînements des deux unités de préhension (210, 210') de telle sorte que les mâchoires de base extérieures (212, 212') des deux unités de préhension (210, 210') soient déplacées de manière synchrone en sens inverse.

14. Procédé selon la revendication 13, comprenant :
transformer le dispositif de préhension d'un préhenseur simple en un préhenseur double, soit en montant deux premiers doigts de préhension supplémentaires sur les mâchoires de base intérieures (213, 213'), soit en retirant les deux premiers doigts de préhension (250, 250') des mâchoires de base extérieures (212, 212') et en montant un deuxième doigt de préhension (220, 230, 220', 230') sur chacune des mâchoires de base extérieures et intérieures (212, 213, 212', 213') ; et
en option, commander indépendamment les entraînements des deux unités de préhension (210, 210') après la transformation en préhenseur double de telle sorte que les mâchoires de base (212, 213 ; 212', 213') de chacune des deux unités de préhension (210, 210') soient déplacées de manière synchrone en sens inverse indépendamment des mâchoires de base de l'autre unité de préhension respective.

15. Procédé selon la revendication 13 ou 14, comprenant :
déterminer une position d'une cible respective (243) sur les doigts de préhension (220, 220') qui sont montés sur les mâchoires de base extérieures (212, 212') des deux unités de préhension (210, 210').
